# FASCICULE DE BREVET EUROPEEN

(11) **EP 2 181 269 B1**
(45) Date de publication et mention de la délivrance du brevet: **17.10.2012**
(21) Numéro de dépôt: 08827796.7
(22) Date de dépôt: 25.06.2008
(51) Int. Cl.: F15B 15/26, B64D 29/08

(54) **VERIN D'OUVERTURE DE CAPOT DE NACELLE DE MOTEUR D'AERONEF**
AKTUATOR ZUM ÖFFNEN EINER FLUGZEUGMOTOR-GONDELVERKLEIDUNG
ACTUATOR FOR OPENING AN AIRCRAFT ENGINE NACELLE COWL

(30) Priorité: 20.08.2007 FR 0705899
(43) Date de publication de la demande: 05.05.2010
(73) Titulaire: Aircelle, 76700 Gonfreville l'Orcher (FR)
(72) Inventeur: MORADELL-CASELLAS, Pierre, 61100 Saint Georges des Groseillers (FR); LEDERLE, Stéphane, 77300 Fontainebleau (FR)
(74) Mandataire: Gaillarde, Frédéric F. Ch.
(86) Numéro de dépôt international: PCT/FR2008/000895
(87) Numéro de publication internationale: WO 2009/024666

(56) Documents cités:
- AU-B2- 438 013
- FR-A- 2 882 087
- US-A- 2 887 991
- US-A- 3 022 771
- US-A- 3 583 288
- US-A1- 2005 168 010
- US-B1- 6 227 485

## Description

La présente invention se rapporte à un vérin d'ouverture de capot de nacelle de moteur d'aéronef, et à une nacelle équipée d'au moins un tel vérin.

Comme cela est connu en soi, une nacelle de moteur d'aéronef comprend au moins un capot mobile entre une position de service, dans laquelle ce capot recouvre le moteur, et une position de maintenance, dans laquelle ce capot est écarté du moteur et permet ainsi l'intervention d'un technicien sur le moteur ou sur l'intrados du capot pour des opérations de maintenance.

Etant donné le poids élevé d'un tel capot, notamment sur les grosses nacelles telles que celles qui sont utilisées sur l'Airbus A380, il est indispensable de prévoir des moyens d'assistance à l'ouverture de ce capot.

Ces moyens d'assistance, fréquemment désignés par le vocable anglo-saxon PCOS (« Powered Cowl Operating System », ce qui signifie « Système motorisé d'actionnement de capot »), comprennent en général au moins un vérin hydraulique ou électrique, pouvant être commandé de manières à ouvrir ou fermer le capot.

Comme cela est connu en soi, un tel vérin comporte, à son extrémité coopérant avec le capot, un dispositif de course morte (« Free Play » en anglais, ce qui signifie « Jeu libre »), autorisant en permanence un petite excursion supplémentaire de l'extrémité de ce vérin pour une extension donnée du vérin.

La fonction de cette course morte et d'une part d'éviter de transmettre des efforts de compression/traction au vérin en situation de vol, lorsque le capot subit des déformations liées à des profils de pression particuliers, et d'autre part de permettre une fermeture manuelle aisée du capot à la fin des opérations de maintenance, en dépit des frottements engendrés par les tolérances des différentes pièces coopérant entre elles.

Une contre-fiche ou béquille est par ailleurs prévue de manière à bloquer le capot en position ouverte et à soulager le vérin du poids de ce capot. Cette contre-fiche est placée manuellement par le technicien, et retirée par lui juste avant la fermeture du capot.

En pratique, juste après avoir ouvert le capot au moyen du vérin et après avoir mis en place la contre-fiche, le technicien commande une légère rétraction du vérin de manière à s'assurer que le poids du capot repose bien sur la contre-fiche, et non sur le vérin : ce faisant, le dispositif de course morte s'étend au moins partiellement.

Or, il peut arriver que la contre-fiche casse sous l'effet du poids du capot et/ou des efforts exercés par le vérin commandé à la fermeture par l'opérateur; du fait de la présence du dispositif de course morte qui se trouve initialement en position au moins partiellement étendue, il y a une véritable chute du capot sur le vérin, d'une hauteur correspondant à l'extension du dispositif de course morte.

Cette chute est très impressionnante pour le technicien qui intervient entre le capot et le moteur, et peut éventuellement le blesser. De plus, ce report brutal de poids du capot sur le vérin peut conduire à l'endommagement de ce vérin par l'effet dynamique supplémentaire induit.

On connaît de US3,583,288 un vérin d'actionnement de porte pour aéronef, comprenant un dispositif permettant une excursion supplémentaire d'une extrémité du vérin pour une extension donnée du vérin.

Dans ce dispositif de la technique antérieure, le déverrouillage/verrouillage de ce dispositif d'excursion supplémentaire nécessite l'intervention manuelle d'un opérateur.

La présente invention a notamment pour but de fournir un vérin muni d'un dispositif de course morte dans lequel le déverrouillage/verrouillage de ce dispositif peut s'effectuer automatiquement, c'est-à-dire sans l'intervention manuelle d'un opérateur.

On atteint ce but de l'invention avec un vérin d'ouverture de capot de nacelle d'aéronef, comprenant :
- un cylindre,
- un dispositif de course morte comprenant une chape montée coulissante axialement à l'extrémité dudit cylindre, et
- des moyens pour bloquer ce dispositif de course morte en position rétractée lorsque ce vérin est en extension,

ce dispositif étant remarquable en ce que ledit cylindre est monté télescopique sur une tige intérieure, en ce que lesdits moyens de blocage comprennent un noyau et des moyens de verrouillage de ladite chape par rapport audit cylindre, en ce que ce noyau est monté coulissant à l'intérieur de ladite chape à l'encontre de moyens élastiques interposés entre cette chape et ce noyau, et en ce que ce noyau est apte à désactiver lesdits moyens de verrouillage lorsqu'il est poussé par ladite tige à l'intérieur de ladite chape, et à activer ces moyens de verrouillage lorsqu'il n'est plus poussé par ladite tige.

Grâce à ces moyens de blocage, le verrouillage (respectivement le déverrouillage) du dispositif de course morte peut s'effectuer de manière automatique, c'est-à-dire dans l'intervention manuelle d'un opérateur, lorsque le vérin passe de sa position rétractée à sa position d'extension (respectivement de sa position d'extension à sa position rétractée).

Suivant des caractéristiques optionnelles du vérin selon l'invention, prises seules ou en combinaison :
- lesdits moyens de verrouillage comprennent un verrou à billes comportant des logements cylindriques formés dans ladite chape, un logement annulaire formé dans un bouchon monté à l'extrémité dudit cylindre et présentant une épaisseur radiale inférieure au diamètre desdites billes, et une partie chanfreinée solidaire dudit noyau, apte à pousser lesdites billes desdits logements cylindriques vers ledit logement annulaire lorsque ledit noyau sort de ladite chape sous l'action desdits moyens élastiques, de manière que lesdites billes viennent bloquer le coulissement vers l'extérieur de ladite chape par rapport audit bouchon ;
- ledit vérin est électrique,
- ledit vérin est hydraulique.

La présente invention se rapporte également à une nacelle de moteur d'aéronef, remarquable en ce qu'elle est équipée d'un vérin conforme à ce qui précède.

D'autres caractéristiques et avantages de la présente invention apparaîtront à la lumière de la description que va suivre, et à l'examen des figures ci-annexées dans lesquelles :
- la figure 1 est une vue en perspective d'un ensemble de moteur et de nacelle d'aéronef, les capots de cette nacelle étant représentés en position de maintenance,
- la figure 2 représente de manière schématique le vérin V d'ouverture de capot de la figure 1, en position rétractée, et
- la figure 3 représente une première variante de ce vérin muni d'un dispositif de blocage du « Free play », en coupe axiale prise à l'extrémité de ce vérin qui coopère avec le capot.

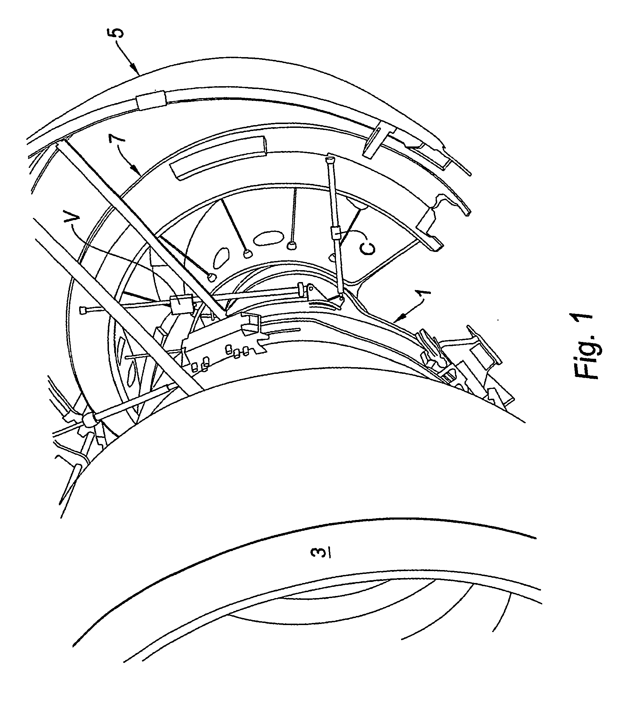

En se reportant à la figure 1, on peut voir un turboréacteur d'aéronef, placé à l'intérieur d'une nacelle dont on voit la partie avant 3, un capot 5 de la partie intermédiaire, et un capot 7 de la partie arrière de cette nacelle.

Les capots 5 et 7 sont représentés en position de maintenance, c'est-à-dire en position d'ouverture vers le haut, permettant l'accès au turboréacteur 1 par un technicien.

Comme cela est connu en soi, le capot 5 est adapté pour recouvrir la partie du moteur 1 qui comprend une soufflante, et le capot 7 peut comprendre des moyens d'inversion de poussée, tels qu'un inverseur de poussée à grille.

Les capots 5 et 7 sont en fait de demi-capots c'est-à-dire qu'ils n'entourent chacun qu'une moitié de la circonférence du turboréacteur 1.

L'actionnement du capot 7 de sa position de fonctionnement, dans laquelle il recouvre l'arrière du turboréacteur 1, vers sa position d'ouverture visible à la figure 1, s'effectue au moyen d'au moins un vérin V électrique ou hydraulique, apte à être commandé par le technicien.

Lorsque ce vérin V se trouve en position d'extension, comme cela est visible sur la figure 1, le capot 7 est ouvert, et peut être maintenu dans cette position au moyen d'une contre-fiche C, positionnée manuellement par le technicien entre le turboréacteur 1 et le capot 7.

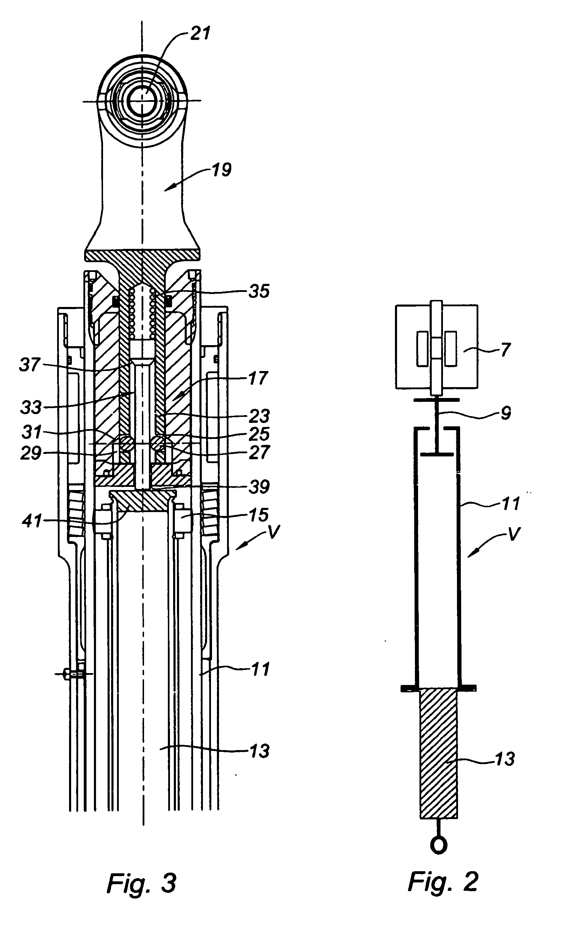

En se reportant à présent à la figure 2, sur laquelle le vérin V est représenté en position rétractée, on peut voir que ce vérin V coopère avec le capot 7 par l'intermédiaire d'une chape 9 montée coulissante à l'extrémité de ce vérin.

Dans le cas particulier où le vérin 2 est un vérin électrique, l'agencement des différents organes situés dans l'extrémité de ce vérin qui coopère avec le capot 7 peut être compris en examinant la figure 3.

On peut voir sur cette figure que le vérin V comprend un cylindre extérieur 11 monté coulissant par rapport à une tige 13.

Plus précisément, la tige 13 est une tige filetée, apte à être mise en rotation par un moteur électrique solidaire du turboréacteur 1 (non représenté).

Sur cette tige filetée est monté un écrou (non représenté), bloqué en rotation par rapport à cette tige et bloqué en translation axiale par rapport au cylindre 11.

Comme on peut donc le comprendre, la rotation de la tige 13 a pour effet d'entraîner la translation axiale dudit écrou, et par là même celle du cylindre 11.

Ce dispositif électrique d'extension et de rétraction du cylindre V porte fréquemment le nom de « vis à billes ».

Le cylindre 11 est obturé, à son extrémité située à proximité du capot 7, par un bouchon 17 à l'intérieur duquel est montée coulissante une chape 19 comprenant un oeil 21, permettant la fixation du vérin sur le capot 7.

Dans sa partie 23 susceptible de pénétrer à l'intérieur du bouchon 17, la chape 19 comporte des logements cylindriques 25 à l'intérieur desquels se trouvent des billes 27.

En vis-à-vis de ces logements cylindriques, lorsque la chape 21 se trouve dans sa position rétractée visible à la figure 3, se trouve un logement annulaire 29 formé dans le bouchon 17.

Dans sa partie supérieure, c'est-à-dire dans sa partie la plus proche de l'extrémité représentée du vérin V, le logement annulaire 29 comporte une partie chanfreinée 31.

A l'intérieur de la chape 19 est monté coulissant un noyau 33, à l'encontre d'un ressort 35.

Ce noyau 33 comporte lui-même une partie chanfreinée 37 apte à coopérer avec les billes 27, comme cela va être expliqué.

On peut remarquer que le noyau 33 traverse un orifice 39 formé dans le bouchon 17, par lequel il peut coopérer avec l'extrémité 41 de la tige filetée 13.

Le mode de fonctionnement de cette première variante du vérin V est le suivant.

La position du vérin V représentée à la figure 3 correspond à celle de la figure 2, c'est-à-dire que ce vérin se trouve en position rétractée : cette position est celle correspondant à la position fermée du capot 7.

Dans cette position, la tige 13 vient pratiquement en butée contre le bouchon 17, et exerce un effort de poussée sur le noyau 33 à l'encontre des moyens élastiques 35 ; le chanfrein 37 ne coopère pas avec les billes 27, et celles-ci restent dans le logement annulaire 25 de la chape 19.

Dans cette configuration, ces billes 27 n'exercent donc aucun blocage vis-à-vis du coulissement de la chape 19 à l'intérieur du bouchon 17 : cette chape 19 peut donc coulisser librement à l'intérieur de ce bouchon, autorisant ainsi un certain jeu du capot 7 par rapport au vérin V.

Ce jeu permet d'une part de reporter sur ce vérin V des efforts de déformation inhérents à des profils particuliers de pression en vol, et d'autre part de fermer correctement le capot en dépit des tolérances des différentes pièces intervenant lors de cette fermeture.

Lorsqu'un technicien souhaite ouvrir le capot 7 de manière à accéder au turboréacteur 1, il commande le fonctionnement du moteur électrique qui permet la rotation de la tige filetée 13, cette rotation ayant pour effet de faire coulisser le cylindre 11 par rapport à cette tige, et donc d'amener le vérin V vers sa position d'extension.

Ce faisant, l'extrémité 41 de la tige 13 s'éloigne du bouchon 17, grâce à quoi le noyau 33 s'éloigne de la chape 19 vers l'intérieur du cylindre 11, sous l'action notamment du ressort 35, et ce, jusqu'à ce que la partie chanfreinée 37 de ce noyau 33 vienne pousser radialement sur les billes 27, de manière à faire passer ces billes des logements cylindriques 25 de la chape 19 vers le logement annulaire 29 du bouchon 17.

La largeur radiale du logement annulaire 29 est inférieure au diamètre des billes 27, de sorte que ces billes ne peuvent pas quitter complètement les logements cylindriques 25 formés dans la chape 19 : ces billes restent donc à chenal entre ces deux logements, bloquant ainsi !e mouvement de coulissement vers l'extérieur de la chape 19 par rapport au bouchon 17.

Ainsi, lorsque le panneau 7 est complètement ouvert, la chape 19 est verrouillée en translation par rapport au vérin 11 : ces deux organes se comportent alors comme un seul organe monobloc.

Ainsi, lorsque le technicien vient pour placer la contre-fiche de sécurité C entre le turboréacteur 1 et le panneau 7, et qu'il rétractera légèrement le vérin V, aucune course de la chape 19 par rapport au cylindre 11 ne sera possible, et l'on ne risquera plus d'avoir une chute brutale du capot 7 en cas de rupture de cette contre-fiche.

Bien entendu, !a présente invention n'est nullement limitée aux modes de réalisation décrits et représentés, fournis à titre de simples exemples.

## Revendications

1. Vérin (V) d'ouverture de capot (7) de nacelle d'aéronef, comprenant :
- un cylindre (11),
- un dispositif de course morte comprenant une chape (19) montée coulissante axialement à l'extrémité dudit cylindre (11), et
- des moyens (25, 27, 29, 31, 33) pour bloquer ce dispositif de course morte (19) en position rétractée lorsque ce vérin (V) est en extension,
ce dispositif étant **caractérisé en ce que** ledit cylindre (11) est monté télescopique sur une tige intérieure (13), **en ce que** lesdits moyens de blocage comprennent un noyau (33) et des moyens de verrouillage (25, 27, 29, 31) de ladite chape (19) par rapport audit cylindre (11), **en ce que** ce noyau (33) est monté coulissant à l'intérieur de ladite chape (19) à l'encontre de moyens élastiques (35) interposés entre cette chape (19) et ce noyau (33), et **en ce que** ce noyau (33) est apte à désactiver lesdits moyens de verrouillage (25, 27, 29, 31) lorsqu'il est poussé par ladite tige (13) à l'intérieur de ladite chape (19), et à activer ces moyens de verrouillage (25, 27, 29, 31) lorsqu'il n'est plus poussé par ladite tige (13).

2. Vérin (V) selon la revendication 1, **caractérisé en ce que** lesdits moyens de verrouillage comprennent un verrou à billes (27) comportant des logements cylindriques (25) formés dans ladite chape (19), un logement annulaire (29) formé dans un bouchon (17) monté à l'extrémité dudit cylindre (11) et présentant une épaisseur radiale inférieure au diamètre desdites billes (27), et une partie chanfreinée (37) solidaire dudit noyau (33), apte à pousser lesdites billes (27) desdits logements cylindriques(25) vers ledit logement annulaire (29) lorsque ledit noyau (33) sort de ladite chape (19) sous l'action desdits moyens élastiques (35), de manière que lesdites billes (27) viennent bloquer le coulissement vers l'extérieur de ladite chape (19) par rapport audit bouchon (17).

3. Vérin (V) selon l'une des revendications 1 ou 2, **caractérisé en ce qu'**il est électrique.

4. Vérin (V) selon l'une quelconque des revendications précédentes, **caractérisé en ce qu'**il est hydraulique.

5. Nacelle de moteur d'aéronef, **caractérisée en ce qu'**elle comprend au moins un vérin (V) conforme à l'une quelconque des revendications précédentes.

## Claims

1. An actuator (V) for opening an aircraft engine nacelle cowl (7), comprising:
- a cylinder (11),
- a free travel device comprising a yoke (19) mounted axially sliding at the end of said cylinder (11), and
- means (25, 27, 29, 31, 33) for blocking said free travel device (19) in the retracted position when said actuator (V) is extended,
said device being **characterized in that** said cylinder (11) is telescopically mounted on an interior rod (13), **in that** said blocking means comprise a core (33) and locking means (25, 27, 29, 31) for locking said yoke (19) in relation to said cylinder (11), **in that** said core (33) is slidingly mounted inside said yoke (19) against elastic means (35) inserted between said yoke (19) and said core (33), and **in that** said core (33) is capable of deactivating said locking means (25, 27, 29, 31), when it is pushed by said rod (13) to the inside of said yoke (19), and activating said locking means (25, 27, 29, 31) when it is no longer pushed by said rod (13).

2. The actuator (V) according to clam 1, **characterized in that** said locking means comprise a ball lock (27) including cylindrical housings (25) formed in said yoke (19), an annular housing (29) formed in a stopper (17) mounted at the end of said cylinder (11) and having a radial thickness smaller than the diameter of said balls (27), and a bezel portion (37) secured to said core (33), capable of pushing said balls (27) of said cylindrical housings (25) toward said annular housing (29) when said core (33) leaves said yoke (19) under the action of said elastic means (35), such that said balls (27) block the outward sliding of said yoke (19) in relation to said stopper (17).

3. The actuator (V) according to one of claims 1 or 2, **characterized in that** it is electric.

4. The actuator (V) according to any one of the preceding claims, **characterized in that** it is hydraulic.

5. An aircraft engine nacelle, **characterized in that** it comprises at least one actuator (V) according to any one of the preceding claims.

## Patentansprüche

1. Aktuator (V) zum Öffnen einer Flugzeugmotor-Gondelverkleidung (7), der umfasst:
- einen Zylinder (11),
- eine Leerweg-Vorrichtung (19), die einen Gabelkopf (19) umfasst, der axial gleitend am Ende des Zylinders (11) montiert ist, und
- Mittel (25, 27, 29, 31, 33), um diese Leerweg-Vorrichtung (19) in eingezogener Stellung zu blockieren, wenn dieser Aktuator (V) ausgedehnt ist,
wobei diese Vorrichtung **dadurch gekennzeichnet ist, dass** der Zylinder (11) teleskopisch auf einer inneren Stange (13) montiert ist, dass die Blockiermittel einen Kern (33) und Verriegelungsmittel (25, 27, 29, 31) des Gabelkopfs (19) im Verhältnis zum Zylinder (11) umfassen, dass dieser Kern (33) im Gabelkopf (19) gegen elastische Mittel (35) zwischen diesem Gabelkopf (19) und diesem Kern (33) gleitend montiert ist und dass dieser Kern (33) imstande ist, die Verriegelungsmittel (25, 27, 29, 31) zu deaktivieren, wenn er von der Stange (13) in den Gabelkopf (19) gedrückt wird und diese Verriegelungsmittel (25, 27, 29, 31) zu aktivieren, wenn er von der Stange (13) nicht mehr gedrückt wird.

2. Aktuator (V) nach Anspruch 1, **dadurch gekennzeichnet, dass** die Verriegelungsmittel eine Kugelsperre (27) umfassen, die zylindrische Aufnahmen (25) aufweist, die in den Gabelkopf (19) eingearbeitet sind, eine ringförmige Aufnahme (29), die in einen Stopfen (17) eingearbeitet ist, der an Ende des Zylinders (11) montiert ist und eine radiale Dicke aufweist, die kleiner ist als der Durchmesser der Kugeln (27), und einen abgeschrägten Abschnitt (37), der mit dem Kern (33) verbunden ist, imstande, die Kugeln (27) der zylindrischen Aufnahmen (25) in Richtung der ringförmigen Aufnahme (29) zu drücken, wenn der Kern (33) den Gabelkopf (19) unter der Einwirkung der elastischen Mittel (35) verlässt, so dass die Kugeln (27) das Gleiten nach außerhalb des Gabelkopfs (19) im Verhältnis zum Stopfen (17) blockieren.

3. Aktuator (V) nach einem der Ansprüche 1 oder 2, **dadurch gekennzeichnet, dass** er elektrisch ist.

4. Aktuator (V) einem der vorangehenden Ansprüche, **dadurch gekennzeichnet, dass** er hydraulisch ist.

5. Flugzeugmotor-Triebwerksgondel, **dadurch gekennzeichnet, dass** sie mindestens einen Aktuator (V) nach einem der vorangehenden Ansprüche umfasst.
